# EUROPEAN PATENT SPECIFICATION

(11) **EP 4 391 490 B1**
(45) Date of publication and mention of the grant of the patent: **31.12.2025**
(21) Application number: 22215928.7
(22) Date of filing: 22.12.2022
(51) Int. Cl.: H04L 67/10

(54) **APPARATUS, METHOD, AND COMPUTER PROGRAM**
VORRICHTUNG, VERFAHREN UND COMPUTERPROGRAMM
APPAREIL, PROCÉDÉ ET PROGRAMME INFORMATIQUE

(43) Date of publication of application: 26.06.2024
(73) Proprietor: Nokia Solutions and Networks Oy, 02610 Espoo (FI)
(72) Inventor: SZILÁGYI, Péter, 1083 Budapest (HU); HANNÁK, Gábor, 1083 Budapest (HU)
(74) Representative: Page White Farrer

(56) References cited:
- WO-A1-2022/261028

## Description

### Field of the disclosure

The examples described herein generally relate to apparatus, methods, and computer programs, and more particularly (but not exclusively) to apparatus, methods and computer programs for apparatuses.

### Background

**A** communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by the 3rd Generation Partnership Project (3GPP), satellite based communication systems and different wireless local networks, for example wireless local area networks (WLAN). The wireless systems can typically be divided into cells, and are therefore often referred to as cellular systems.

The communication system and associated devices typically operate in accordance with a given standard or specification which sets out what the various entities associated with the system are permitted to do and how that should be achieved. Communication protocols and/or parameters which shall be used for the connection are also typically defined. Examples of standard are the so-called 5G standards. 3GPP has issued a number of releases (Rel) for defining operating communication protocols related to a communications network. Currently, objectives and work are being set in relation to Release 18 (Rel. 18).

International patent application publication number WO 2022/261028 A1 relates to systems, methods, and devices related to data functions. According to this document, a device may identify a first request received from a data consumer non-RT RIC application (rApp), wherein the first request is received over an R1 termination interface. The device may cause to send a first response to the data consumer rApp in response to the first request. The device may identify a data producer rApp by checking a data catalog in order to satisfy the first request. The device may cause to send a notification frame to the data consumer rApp over the R1 termination interface indicating that data will be delivered to the data consumer rApp.

### Summary

According to a first aspect, there is provided a method for a first network apparatus, the method comprising: receiving, from a data registry, information about a form of a data type registered as being output by a non-real time Radio Access Network Intelligent Controller application, rApp; receiving, from the rApp, a data output; using said information and the data output to perform at least one of: a first determination that determines that the registered data type is inconsistent in form with the data output; and a second determination that determines that the data output comprises invalid values; and signalling an indication of the result of said first and/or second determination to a second network apparatus.

Said using may comprise determining both the first and second determinations.

Said using may comprise determining only one of the first and second determinations.

The information about the form of the data type registered as being output by the rApp may comprise metadata comprising at least one of: a schema; a semantic description; an availability of the data output; a frequency of the data output; pre-processing capabilities of the rApp; and filtering capabilities of the rApp.

Performing the first determination may comprise: comparing the information about the form of the data type to the form of the received data output; and determining that the registered data type is inconsistent in form with a form of the data output by the rApp.

Performing the second determination may comprise: analyzing at least one value comprised in the data output to determine whether the at least one value is usable as an input to another rApp; and determining that the data output comprises invalid values when the at least one value is not usable as an input to another rApp.

The analyzing may comprise at least one of: determining whether the at least one value is random; determining whether the at least one value is inconsistent with a definition of data produced according to the received form of the data type; and comparing the at least one value to at least one of: all zeroes; at least one constant value; and empty data.

The first and second determinations may be performed in parallel.

The first and second determinations may be performed in series.

The method may comprise: receiving at least one output from at least one rApp, wherein the at least one rApp has not been indicated as having a data type that is inconsistent in form with a form of data type registered as being output by the rApp, and/or has not been indicated as having a data output that comprises invalid values; using the at least one output to determine a change to be made to the operation of a radio access network for optimising resources within the radio access network; and causing said change to be made to the radio access network.

The indication may comprise only one of said first and second determinations

The indication may comprise both the first and second determinations.

The first network apparatus may be at least one of: an rApp; and an entity of a Service, Management, and Orchestration function.

The second network apparatus may be an entity that performs security and/or management functions of a Service, Management, and Orchestration function, and/or the second network apparatus is a data registration function of a Data Management and Exposure function.

The first and/or second network apparatus may be located in a RAN Intelligent controller (RIC).

According to a second aspect, there is provided a method for a second network apparatus, the method comprising: receiving, from a first network apparatus, an indication of at least one of the following: a first determination that a data type being output by a non-real time Radio Access Network Intelligent Controller application, rApp, is inconsistent in form with a form of data type registered as being output by the rApp; and a second determination data output by the rApp comprises invalid values, and in response to said indication, blacklisting the rApp to prevent other rApps from using said output as an input.

The method may comprise: receiving at least one output from at least one rApp, wherein the at least one rApp has not been indicated as having a data type that is inconsistent in form with a form of data type registered as being output by the rApp, and/or has not been indicated as having a data output that comprises invalid values; using the at least one output to determine a change to be made to the operation of a radio access network for optimising resources within the radio access network; and causing said change to be made to the radio access network.

The indication may comprise only one of said first and second determinations

The indication may comprise both the first and second determinations.

The first network apparatus may be at least one of: an rApp; and an entity of a Service, Management, and Orchestration function.

The second network apparatus may be an entity that performs security and/or management functions of a Service, Management, and Orchestration function, and/or the second network apparatus is a data registration function of a Data Management and Exposure function.

The first and/or second network apparatus may be located in a RAN Intelligent controller (RIC).

According to a third aspect, there is provided a first network apparatus, the first network apparatus comprising means for performing: receiving, from a data registry, information about a form of a data type registered as being output by a non-real time Radio Access Network Intelligent Controller application, rApp; receiving, from the rApp, a data output; using said information and the data output to perform at least one of: a first determination that determines that the registered data type is inconsistent in form with the data output; and a second determination that determines that the data output comprises invalid values; and signalling an indication of the result of said first and/or second determination to a second network apparatus.

Said means for using may comprise means for determining both the first and second determinations.

Said means for using may comprise means for determining only one of the first and second determinations.

The information about the form of the data type registered as being output by the rApp may comprise metadata comprising at least one of: a schema; a semantic description; an availability of the data output; a frequency of the data output; pre-processing capabilities of the rApp; and filtering capabilities of the rApp.

The means for performing the first determination may comprise means for: comparing the information about the form of the data type to the form of the received data output; and determining that the registered data type is inconsistent in form with a form of the data output by the rApp.

The means for performing the second determination may comprise means for: analyzing at least one value comprised in the data output to determine whether the at least one value is usable as an input to another rApp; and determining that the data output comprises invalid values when the at least one value is not usable as an input to another rApp.

The means for analyzing may comprise means for performing at least one of: determining whether the at least one value is random; determining whether the at least one value is inconsistent with a definition of data produced according to the received form of the data type; and comparing the at least one value to at least one of: all zeroes; at least one constant value; and empty data.

The first and second determinations may be performed in parallel.

The first and second determinations may be performed in series.

The first network apparatus may comprise means for: receiving at least one output from at least one rApp, wherein the at least one rApp has not been indicated as having a data type that is inconsistent in form with a form of data type registered as being output by the rApp, and/or has not been indicated as having a data output that comprises invalid values; using the at least one output to determine a change to be made to the operation of a radio access network for optimising resources within the radio access network; and causing said change to be made to the radio access network.

The indication may comprise only one of said first and second determinations

The indication may comprise both the first and second determinations.

The first network apparatus may be at least one of: an rApp; and an entity of a Service, Management, and Orchestration function.

The second network apparatus may be an entity that performs security and/or management functions of a Service, Management, and Orchestration function, and/or the second network apparatus is a data registration function of a Data Management and Exposure function.

The first and/or second network apparatus may be located in a RAN Intelligent controller (RIC).

According to a fourth aspect, there is provided a second network apparatus, the apparatus comprising means for performing: receiving, from a first network apparatus, an indication of at least one of the following: a first determination that a data type being output by a non-real time Radio Access Network Intelligent Controller application, rApp, is inconsistent in form with a form of data type registered as being output by the rApp; and a second determination data output by the rApp comprises invalid values, and in response to said indication, blacklisting the rApp to prevent other rApps from using said output as an input.

**The** second network apparatus may comprise means for: receiving at least one output from at least one rApp, wherein the at least one rApp has not been indicated as having a data type that is inconsistent in form with a form of data type registered as being output by the rApp, and/or has not been indicated as having a data output that comprises invalid values; using the at least one output to determine a change to be made to the operation of a radio access network for optimising resources within the radio access network; and causing said change to be made to the radio access network.

The indication may comprise only one of said first and second determinations

The indication may comprise both the first and second determinations.

The first network apparatus may be at least one of: an rApp; and an entity of a Service, Management, and Orchestration function.

The second network apparatus may be an entity that performs security and/or management functions of a Service, Management, and Orchestration function, and/or the second network apparatus is a data registration function of a Data Management and Exposure function.

The first and/or second network apparatus may be located in a RAN Intelligent controller (RIC).

According to a fifth aspect, there is provided a first network apparatus, the first network apparatus comprising: at least one processor; and at least one memory comprising code that, when executed by the at least one processor, causes the first network apparatus to perform: receiving, from a data registry, information about a form of a data type registered as being output by a non-real time Radio Access Network Intelligent Controller application, rApp; receiving, from the rApp, a data output; using said information and the data output to perform at least one of: a first determination that determines that the registered data type is inconsistent in form with the data output; and a second determination that determines that the data output comprises invalid values; and signalling an indication of the result of said first and/or second determination to a second network apparatus.

Said using may comprise determining both the first and second determinations.

Said using may comprise determining only one of the first and second determinations.

The information about the form of the data type registered as being output by the rApp may comprise metadata comprising at least one of: a schema; a semantic description; an availability of the data output; a frequency of the data output; pre-processing capabilities of the rApp; and filtering capabilities of the rApp.

The performing the first determination may comprise: comparing the information about the form of the data type to the form of the received data output; and determining that the registered data type is inconsistent in form with a form of the data output by the rApp.

The performing the second determination may comprise: analyzing at least one value comprised in the data output to determine whether the at least one value is usable as an input to another rApp; and determining that the data output comprises invalid values when the at least one value is not usable as an input to another rApp.

The analyzing may comprise performing at least one of: determining whether the at least one value is random; determining whether the at least one value is inconsistent with a definition of data produced according to the received form of the data type; and comparing the at least one value to at least one of: all zeroes; at least one constant value; and empty data.

The first and second determinations may be performed in parallel.

The first and second determinations may be performed in series.

The first network apparatus may be caused to perform: receiving at least one output from at least one rApp, wherein the at least one rApp has not been indicated as having a data type that is inconsistent in form with a form of data type registered as being output by the rApp, and/or has not been indicated as having a data output that comprises invalid values; using the at least one output to determine a change to be made to the operation of a radio access network for optimising resources within the radio access network; and causing said change to be made to the radio access network.

The indication may comprise only one of said first and second determinations

The indication may comprise both the first and second determinations.

The first network apparatus may be at least one of: an rApp; and an entity of a Service, Management, and Orchestration function.

The second network apparatus may be an entity that performs security and/or management functions of a Service, Management, and Orchestration function, and/or the second network apparatus is a data registration function of a Data Management and Exposure function.

The first and/or second network apparatus may be located in a RAN Intelligent controller (RIC).

According to a sixth aspect, there is provided a second network apparatus, the apparatus comprising: at least one processor; and at least one memory comprising code that, when executed by the at least one processor, causes the apparatus to perform: receiving, from a first network apparatus, an indication of at least one of the following: a first determination that a data type being output by a non-real time Radio Access Network Intelligent Controller application, rApp, is inconsistent in form with a form of data type registered as being output by the rApp; and a second determination data output by the rApp comprises invalid values, and in response to said indication, blacklisting the rApp to prevent other rApps from using said output as an input.

The second network apparatus may be caused to perform: receiving at least one output from at least one rApp, wherein the at least one rApp has not been indicated as having a data type that is inconsistent in form with a form of data type registered as being output by the rApp, and/or has not been indicated as having a data output that comprises invalid values; using the at least one output to determine a change to be made to the operation of a radio access network for optimising resources within the radio access network; and causing said change to be made to the radio access network.

The indication may comprise only one of said first and second determinations

The indication may comprise both the first and second determinations.

The first network apparatus may be at least one of: an rApp; and an entity of a Service, Management, and Orchestration function.

**The** second network apparatus may be an entity that performs security and/or management functions of a Service, Management, and Orchestration function, and/or the second network apparatus is a data registration function of a Data Management and Exposure function.

The first and/or second network apparatus may be located in a RAN Intelligent controller (RIC).

According to a seventh aspect, there is provided a first network apparatus, the first network apparatus comprising: receiving circuitry for receiving, from a data registry, information about a form of a data type registered as being output by a non-real time Radio Access Network Intelligent Controller application, rApp; receiving circuitry for receiving, from the rApp, a data output; using circuitry for using said information and the data output to perform at least one of: a first determination that determines that the registered data type is inconsistent in form with the data output; and a second determination that determines that the data output comprises invalid values; and signaling circuitry for signalling an indication of the result of said first and/or second determination to a second network apparatus.

Said using circuitry for using may comprise determining circuitry for determining both the first and second determinations.

Said using circuitry for using may comprise determining circuitry for determining only one of the first and second determinations.

The information about the form of the data type registered as being output by the rApp may comprise metadata comprising at least one of: a schema; a semantic description; an availability of the data output; a frequency of the data output; pre-processing capabilities of the rApp; and filtering capabilities of the rApp.

The performing circuitry for performing the first determination may comprise: comparing circuitry for comparing the information about the form of the data type to the form of the received data output; and determining circuitry for determining that the registered data type is inconsistent in form with a form of the data output by the rApp.

The performing circuitry for performing the second determination may comprise: analyzing circuitry for analyzing at least one value comprised in the data output to determine whether the at least one value is usable as an input to another rApp; and determining circuitry for determining that the data output comprises invalid values when the at least one value is not usable as an input to another rApp.

The analyzing circuitry for analyzing may comprise performing circuitry for performing at least one of: determining whether the at least one value is random; determining whether the at least one value is inconsistent with a definition of data produced according to the received form of the data type; and comparing the at least one value to at least one of: all zeroes; at least one constant value; and empty data.

The first and second determinations may be performed in parallel.

The first and second determinations may be performed in series.

The first network apparatus may comprise: receiving circuitry for receiving at least one output from at least one rApp, wherein the at least one rApp has not been indicated as having a data type that is inconsistent in form with a form of data type registered as being output by the rApp, and/or has not been indicated as having a data output that comprises invalid values; using circuitry for using the at least one output to determine a change to be made to the operation of a radio access network for optimising resources within the radio access network; and causing circuitry for causing said change to be made to the radio access network.

The indication may comprise only one of said first and second determinations

The indication may comprise both the first and second determinations.

The first network apparatus may be at least one of: an rApp; and an entity of a Service, Management, and Orchestration function.

The second network apparatus may be an entity that performs security and/or management functions of a Service, Management, and Orchestration function, and/or the second network apparatus is a data registration function of a Data Management and Exposure function.

The first and/or second network apparatus may be located in a RAN Intelligent controller (RIC).

According to an eighth aspect, there is provided a second network apparatus, the apparatus comprising: receiving circuitry for receiving, from a first network apparatus, an indication of at least one of the following: a first determination that a data type being output by a non-real time Radio Access Network Intelligent Controller application, rApp, is inconsistent in form with a form of data type registered as being output by the rApp; and a second determination data output by the rApp comprises invalid values, and blacking circuitry for, in response to said indication, blacklisting the rApp to prevent other rApps from using said output as an input.

The second network apparatus may comprise: receiving circuitry for receiving at least one output from at least one rApp, wherein the at least one rApp has not been indicated as having a data type that is inconsistent in form with a form of data type registered as being output by the rApp, and/or has not been indicated as having a data output that comprises invalid values; using circuitry for using the at least one output to determine a change to be made to the operation of a radio access network for optimising resources within the radio access network; and causing circuitry for causing said change to be made to the radio access network.

The indication may comprise only one of said first and second determinations

The indication may comprise both the first and second determinations.

The first network apparatus may be at least one of: an rApp; and an entity of a Service, Management, and Orchestration function.

The second network apparatus may be an entity that performs security and/or management functions of a Service, Management, and Orchestration function, and/or the second network apparatus is a data registration function of a Data Management and Exposure function.

The first and/or second network apparatus may be located in a RAN Intelligent controller (RIC).

According to a ninth aspect, there is provided non-transitory computer readable medium comprising program instructions for causing a first network apparatus to perform: receiving, from a data registry, information about a form of a data type registered as being output by a non-real time Radio Access Network Intelligent Controller application, rApp; receiving, from the rApp, a data output; using said information and the data output to perform at least one of: a first determination that determines that the registered data type is inconsistent in form with the data output; and a second determination that determines that the data output comprises invalid values; and signalling an indication of the result of said first and/or second determination to a second network apparatus.

Said using may comprise determining both the first and second determinations.

Said using may comprise determining only one of the first and second determinations.

The information about the form of the data type registered as being output by the rApp may comprise metadata comprising at least one of: a schema; a semantic description; an availability of the data output; a frequency of the data output; pre-processing capabilities of the rApp; and filtering capabilities of the rApp.

The performing the first determination may comprise: comparing the information about the form of the data type to the form of the received data output; and determining that the registered data type is inconsistent in form with a form of the data output by the rApp.

The performing the second determination may comprise: analyzing at least one value comprised in the data output to determine whether the at least one value is usable as an input to another rApp; and determining that the data output comprises invalid values when the at least one value is not usable as an input to another rApp.

The analyzing may comprise performing at least one of: determining whether the at least one value is random; determining whether the at least one value is inconsistent with a definition of data produced according to the received form of the data type; and comparing the at least one value to at least one of: all zeroes; at least one constant value; and empty data.

The first and second determinations may be performed in parallel.

The first and second determinations may be performed in series.

The first network apparatus may be caused to perform: receiving at least one output from at least one rApp, wherein the at least one rApp has not been indicated as having a data type that is inconsistent in form with a form of data type registered as being output by the rApp, and/or has not been indicated as having a data output that comprises invalid values; using the at least one output to determine a change to be made to the operation of a radio access network for optimising resources within the radio access network; and causing said change to be made to the radio access network.

The indication may comprise only one of said first and second determinations

The indication may comprise both the first and second determinations.

The first network apparatus may be at least one of: an rApp; and an entity of a Service, Management, and Orchestration function.

The second network apparatus may be an entity that performs security and/or management functions of a Service, Management, and Orchestration function, and/or the second network apparatus is a data registration function of a Data Management and Exposure function.

The first and/or second network apparatus may be located in a RAN Intelligent controller (RIC).

According to a tenth aspect, there is provided non-transitory computer readable medium comprising program instructions for causing a second network apparatus to perform: receiving, from a first network apparatus, an indication of at least one of the following: a first determination that a data type being output by a non-real time Radio Access Network Intelligent Controller application, rApp, is inconsistent in form with a form of data type registered as being output by the rApp; and a second determination data output by the rApp comprises invalid values, and in response to said indication, blacklisting the rApp to prevent other rApps from using said output as an input.

The second network apparatus may be caused to perform: receiving at least one output from at least one rApp, wherein the at least one rApp has not been indicated as having a data type that is inconsistent in form with a form of data type registered as being output by the rApp, and/or has not been indicated as having a data output that comprises invalid values; using the at least one output to determine a change to be made to the operation of a radio access network for optimising resources within the radio access network; and causing said change to be made to the radio access network.

The indication may comprise only one of said first and second determinations

The indication may comprise both the first and second determinations.

The first network apparatus may be at least one of: an rApp; and an entity of a Service, Management, and Orchestration function.

The second network apparatus may be an entity that performs security and/or management functions of a Service, Management, and Orchestration function, and/or the second network apparatus is a data registration function of a Data Management and Exposure function.

The first and/or second network apparatus may be located in a RAN Intelligent controller (RIC).

According to an eleventh aspect, there is provided a computer program product stored on a medium that may cause an apparatus to perform any method as described herein.

According to a twelfth aspect, there is provided an electronic device that may comprise apparatus as described herein.

According to a thirteenth aspect, there is provided a chipset that may comprise an apparatus as described herein.

### Brief description of Figures

Some examples, will now be described, merely by way of illustration only, with reference to the accompanying drawings in which:
Figure 1 shows a schematic representation of a 5G system;
Figure 2 shows a schematic representation of a network apparatus;
Figure 3 shows a schematic representation of a user equipment;
Figure 4 illustrates example data types entering and leaving an rApp;
Figure 5 illustrates an example architecture;
Figures 6 to 10 illustrate example architecture; and
Figures 11 and 12 illustrate example operations that may be performed by apparatus described herein.

### Detailed description

In the following description of examples, certain aspects are explained with reference to devices that are often capable of communication via a wireless cellular system and mobile communication systems serving such mobile communication devices. For brevity and clarity, the following describes such aspects with reference to a 5G wireless communication system. However, it is understood that such aspects are not limited to 5G wireless communication systems, and may, for example, be applied to other wireless communication systems (for example, current 6G proposals, IEEE 802.11, etc.).

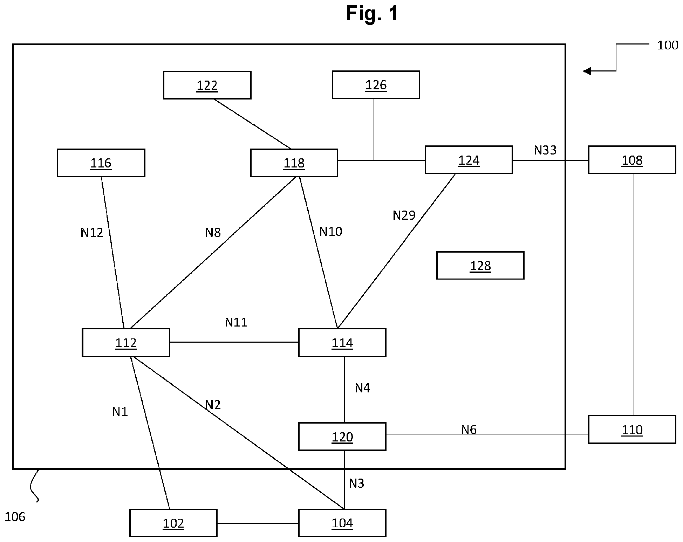

Before describing in detail the examples, certain general principles of a 5G wireless communication system are briefly explained with reference to Figures 1 to 3.

Figure 1 shows a schematic representation of a 5G system (5GS) 100. The 5GS may comprise a user equipment (UE) 102 (which may also be referred to as a communication device or a terminal), a 5G access network (AN) (which may be a 5G Radio Access Network (RAN) or any other type of 5G AN such as a Non-3GPP Interworking Function (N3IWF) /a Trusted Non3GPP Gateway Function (TNGF) for Untrusted / Trusted Non-3GPP access or Wireline Access Gateway Function (W-AGF) for Wireline access) 104, a 5G core (5GC) 106, one or more application functions (AF) 108 and one or more data networks (DN) 110.

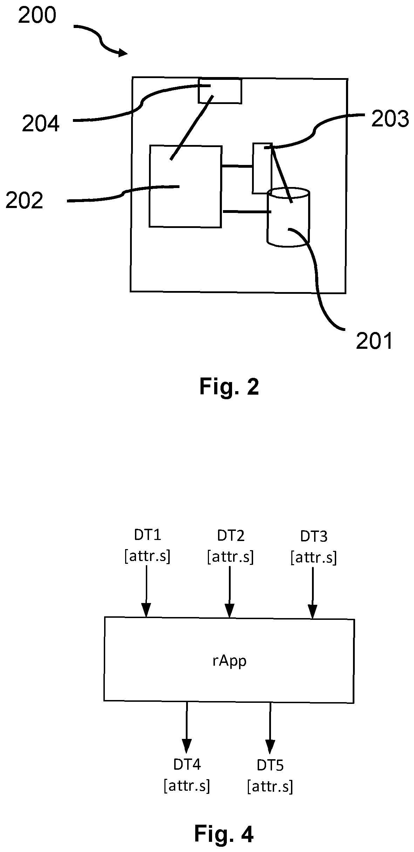

Figure 2 shows an example of a control apparatus for a communication system, for example to be coupled to and/or for controlling a station of an access system, such as a RAN node, e.g. a base station, gNB, a central unit of a cloud architecture or a node of a core network such as an MME or S-GW, a scheduling entity such as a spectrum management entity, or a server or host, for example an apparatus hosting an NRF, NWDAF, AMF, SMF, UDM/UDR, and so forth. The control apparatus may be integrated with or external to a node or module of a core network or RAN. In some examples, base stations comprise a separate control apparatus unit or module. In other examples, the control apparatus can be another network element, such as a radio network controller or a spectrum controller. The control apparatus 200 can be arranged to provide control on communications in the service area of the system. The apparatus 200 comprises at least one memory 201, at least one data processing unit 202, 203 and an input/output interface 204. Via the interface the control apparatus can be coupled to a receiver and a transmitter of the apparatus. The receiver and/or the transmitter may be implemented as a radio front end or a remote radio head. For example, the control apparatus 200 or processor 201 can be configured to execute an appropriate software code to provide the control functions.

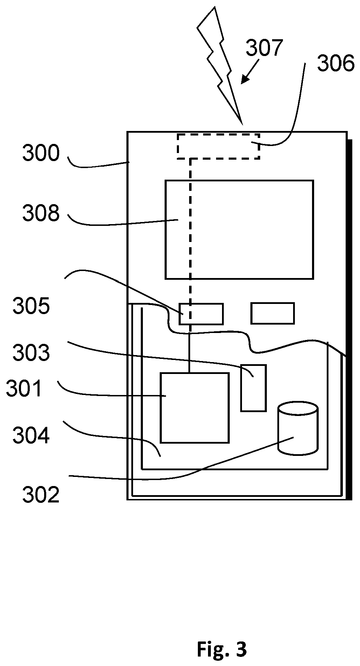

A possible wireless communication device will now be described in more detail with reference to Figure 3 showing a schematic, partially sectioned view of a communication device 300. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is referred to as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

**A** wireless communication device may be for example a mobile device, that is, a device not fixed to a particular location, or it may be a stationary device. The wireless device may need human interaction for communication, or may not need human interaction for communication. As described herein, the terms UE or "user" are used to refer to any type of wireless communication device.

The wireless device 300 may receive signals over an air or radio interface 307 via appropriate apparatus for receiving and may transmit signals via appropriate apparatus for transmitting radio signals. In Figure 3, a transceiver apparatus is designated schematically by block 306. The transceiver apparatus 306 may be provided, for example, by means of a radio part and associated antenna arrangement. The antenna arrangement may be arranged internally or externally to the wireless device.

A wireless device is typically provided with at least one data processing entity 301, at least one memory 302 and other possible components 303 for use in software and hardware aided execution of Tasks it is designed to perform, including control of access to and communications with access systems and other communication devices. The data processing, storage and other relevant control apparatus can be provided on an appropriate circuit board and/or in chipsets. This feature is denoted by reference 304. The user may control the operation of the wireless device by means of a suitable user interface such as keypad 305, voice commands, touch sensitive screen or pad, combinations thereof or the like. A display 308, a speaker and a microphone can be also provided. Furthermore, a wireless communication device may comprise appropriate connectors (either wired or' wireless) to other devices and/or for connecting external accessories, for example hands-free equipment, thereto.

Mobile, or cellular/wireless networks such as the above example of Figure 1 can be said to comprise two domains: a Radio Access Network (RAN) domain and the Core Network (Core) domain.

The RAN is a final link located between the core network and a wireless communication device, and converts signals for transmission between the core network and the wireless communication device.

The Core has many functions: It provides access controls ensuring users are authenticated for the services they are using, it routes telephone calls over the public switched telephone network, it enables operators to charge for calls and data use, and it connects users to the rest of the world via the Internet.

The 5G RAN of Figure 1 may comprise one or more access nodes for performing RAN domain functions in the form of one or more gNodeB (gNB) distributed unit functions connected to one or more gNodeB (gNB) unit functions.

The 5GC 106 of Figure 1 may comprise one or more Access and Mobility Management Functions (AMF) 112, one or more Session Management Functions (SMF) 114, one or more authentication server functions (AUSF) 116, one or more unified data management (UDM) functions 118, one or more user plane functions (UPF) 120, one or more unified data repository (UDR) functions 122, one or more network repository functions (NRF) 128, and/or one or more network exposure functions (NEF) 124. The role of an NEF is to provide secure exposure of network services (e.g. voice, data connectivity, charging, subscriber data, and so forth) towards a 3rd party. Although NRF 128 is not depicted with its interfaces, it is understood that this is for clarity reasons and that NRF 128 may have a plurality of interfaces with other network functions. The 5GC 106 also comprises a network data analytics function (NWDAF) 126.

Whilst it was always possible for operators to have one vendor for their core network and a separate vendor for the RAN, interoperability between RAN equipment from different vendors was deprioritized at the expense of adding overall functional capability. As a result, with current network configurations, it is difficult to mix vendors for the radio and baseband unit, and, in most cases, they come from the same supplier.

Open RAN looks to change current network configurations and enable operators to mix and match components by opening the interfaces inside base stations.

In an Open RAN environment, the RAN is disaggregated into three main building blocks:
- a Radio Unit (RU)
- a Distributed Unit (DU)
- a Centralised Unit (CU)

There may be a plurality of these building blocks comprised in a RAN.

The RU is where the radio frequency signals are transmitted, received, amplified, and digitized. The RU is located near or integrated into, an antenna configured to transmit to and/or receive signalling from the communication device. The DU and CU are the computation parts of the base station, sending the digitalized radio signal into the core network. The DU is physically located at or near the RU whereas the CU can be located nearer the Core.

As mentioned above, a key concept of Open RAN relates to "opening" the protocols and interfaces between these various building blocks (radios, hardware, and software) in the RAN in order to allow multi-vendor RAN configurations. The O-RAN Alliance has defined different interfaces within the RAN that can be "opened" for enabling this, including those for a fronthaul interface between the Radio Unit and the Distributed Unit, and a midhaul interface between the Distributed Unit and the Centralized Unit.

Open RAN also comprises a RAN Intelligent Controller (RIC). RIC is an essential component of the Open RAN architecture, with RIC architecture comprising a DU software function, multi-Radio Access Technology (multi-RAT) CU protocol stack, a near-real time RIC and orchestration layer (e.g., a network management system (NMS)) with Non-Real Time RIC.

The RIC comprises both non-real-time (non-RT) and near-real-time (near RT) components, both of which manage separate functions of the RAN. The non-RT RIC manages events and resources with a response time of one second or more. The near RT RIC manages and events and resources requiring a faster response down to 10 milliseconds (ms). The non-RT RIC may be deployed centrally, while the near RT RIC can be deployed centrally or on the network edge. The RIC may manage non-real time (non-RT) and near-real time (near-RT) events separately. Non-RT events (which may be event loops of 1 second or greater) may be handled within a Service and Management Orchestration (SMO) layer of the RIC, the SMO functioning centrally on the operator's network. The non-RT RIC communicates with the near-RT RIC's counterpart applications, called xApps, to provide policy-based guidance. Non-RT RIC Apps (rApps) is the name given to functions that manage non-real time events within the RIC in form of analytics or intelligent network management. Non-RT RIC may thus be considered to be a logical entity that provides a platform for rApps. rApps interface over an R1 interface. An R1 interface is an interface between an rApp and non-RT RIC framework entities via which R1 services can be produced and consumed. R1 services are currently defined by ORAN as being a collection of services including, but not limited to, service registration and discovery services, 13 authentication and authorization services, Artificial Intelligence/Machine learning workflow services, and A1- (i.e., the interface between a non-RT RIC and a near-RT RIC), O1- (e.g., an interface between the SMO layer and O-RAN network functions) and O2- (e.g., an interface between the SMO layer and an open cloud) related services.

In order to function, rApps consume input data of certain Data Types (DTs) with defined attribute values. For example, one rApp may require data from 3GPP performance management (PM) counter with a given data collection granularity and accuracy. In turn, the rApps output data of certain DTs and associated attribute values. For example, an rApp may be configured to output a key performance indicator (KPI)I with certain data collection granularity and accuracy. These rApps outputs may then be input to at least one other O-RAN functions, e.g., rApps.

A Data Type is at least one attribute of a piece of data that tells a device how the end-user might interact with the data. Some of these Data Types include: integer, character, floating point (real), long, short, string, Boolean, nothing, and void. A brief overview of these Data Types are provided below.

Integer Data Types often represent whole numbers in programming. An integer's value moves from one integer to another without acknowledging fractional numbers in between.

In coding, alphabet letters denote characters. Characters are usually fixed-length figures that default to 1 octet-an 8-bit unit of digital information.

### Floating-point Data Types represent fractional numbers in programming

Long Data Types are often 32- or 64-bit integers in code. Sometimes, these can represent integers with 20 digits in either direction, positive or negative. Similar to the long Data Type, a short is a variable integer.

A string Data Type is a combination of characters that can be either constant or variable. The string Data Type often incorporates a sequence of character Data Types that result in specific commands depending on the programming language. Strings can include both upper and lowercase letters, numbers and punctuation.

Boolean data is what programmers use to show logic in code. It's typically one of two values intended to clarify conditional statements(e.g., true or false). These can be responses to "if/when" scenarios, where code indicates whether a user performs a certain action. When this happens, the Boolean data directs the program's response, which determines the next code in the sequence.

The nothing Data Type shows that a code has no value. This might indicate that a code is missing, the programmer started the code incorrectly or that there were values that defy the intended logic. It's also called the "nullable type."

Similar to the nothing type, the void type comprises a value that the code cannot process. Void Data Types tell a receiving entity that the code can't return a response.

Combinations of these and hierarchical arrangements of DTs may also constitute DTs. For example, a temperature measurement DT may comprise a data structure of:

```
      {
      value [float]: 15.5;
      unit [string]: "Celsius"
      }
      while a device state DT may comprise:
      {
      on [bool]: True;
      temperature [temperature]: temperature_instance_1
      }
```

The defined attributes of Data Types may comprise, but are not restricted to, e.g., data collection granularity, storage/streaming/buffering capability, accuracy, confidence interval, syntax, start/stop time of data production, time interval for the data points (e.g., one data point may represent a certain time range such as, e.g., 8:00am-9:00am), periodicity of production of data, periodicity of delivery of data, and/or target of data (e.g., set of managed objects to which the data is associated).. This is illustrated with respect to Figure 4, which shows an rApp receiving three different data types (labelled as DT1, DT2, DT3), and outputs two different data types (labelled as DT4, DT5).

rApps can be Data Producers (DPs) and/or Data Consumers (DCs). The Data Registration and Discovery Service (DRDS) is an R1 interface service, and its producer's task is to handle available data types from DPs and for DCs.

The Data Request and Subscription Service allows the DT consumers to request data instances for a specified DT. Pull Data and Push Data Services are available for delivery of data instances. Using the procedures of the Data Registration and Discovery Service, DPs register the DTs that they produce, while DCs query and discover available DTs which they need to consume.

rApp life cycle and deployment is managed by a Service Management and Orchestration (SMO) logical entity over an O2 interface's Deployment Management Services (DMS). An O2 interface extends between cloud services for the ORAN (located outside of the ORAN itself) and between the SMO.

Therefore, in summary, rApps, which may be made by any vendor, rely on input data (e.g., from other rApps) and provide output data (e.g., to other rApps). In order for the rApp to function (and thereby to produce its defined output data), the rApp's input data requirements need to be fulfilled. In other words, an rApp needs to be able to consume data of certain DTs and associated properties.

As any vendor may produce an rApp, rApps may be susceptible to exploitation by malicious actors or may otherwise become faulty (e.g., lack of updates or development).

The present application recognizes that this exploitation or fault may manifest in at least one of two different ways.

First, the form of the Data Type produced by the rApp may not be the form of Data Type that the rApp is registered as producing. In other words, the form of Data Type output by an rApp may not be as expected. This can result in problems from other rApps that receive such an output as an input. For example, faulty or malicious rApps may register output DTs that they then do not produce and cause Denial-of-Service (DoS) errors for DCs that depend on receiving such output DTs as inputs.

Second, the data comprised in the Data Type produced by an rApp may be faulty. In other words, the data comprised in an output Data Type may be inconsistent or otherwise incorrect (e.g., an all-zero output). Therefore, a faulty or malicious rApp producing inconsistent or incorrect data can threaten the operation of all dependent rApps (i.e., those rApps which ingest the faulty rApp's output data), and eventually all dependent RAN functions.

These two possible sources of error are illustrated with reference to a description of rApp chains.

In the current standards, DPs (which may be deployed rApps) can register the DTs that they can produce in a registry (e.g., a Data Registration and Discovery Service provider), while DCs (which may be deployed rApps) can query the registry to discover DTs that are available to consume in runtime. Upon deployment, an rApp first checks the availability of the DTs that it is required to consume, and only after that does it register the DTs it is able to produce. This is because an rApp needs to verify that it has access to the correct type of input in order to fulfil the rApp's input-output dependencies. It is intrinsic to the rApp to determine whether to continue registration interactions or not in dependence on whether a predefined set of DTs are not available to the rApp for consumption.

In case a DT that was not available at the time of deployment becomes available later, the Non-RT RIC framework (e.g., the respective R1 service producer) allows for the rApp to be notified that said DT is now available. However, the rApp, upon or after deployment, will not automatically try to consume its input DTs. Instead, the rApp will trust the Data Registration and Discovery Service provider that the DTs are indeed available when necessary.

Therefore, after an rApp is deployed, the rApp checks with a Data Registration and Discovery Service provider whether the rApps' input DT requirements are fulfilled. If yes, the rApp won't try to ingest those DTs but assumes that they will be available on demand at some later time.

The rApp will register its output DTs with the Data Registration and Discovery Service provider. Since DT producer rApps are not forced to output their produced DTs to DCs after DT registration, many interdependent rApps may be deployed without consuming and producing their DTs, but only verifying and "believing" that the rApp's input DTs would be available upon request. For example, an rApp may perform a DT discovery procedure to discover a DT and perform a DT information query procedure via the Data Registration and Discovery service provider(s).

When an rApp in a chain of rApps decides to consume its predefined set of input DT(s), all rApps in the input-output dependency chain will produce their respective data. However, when a malicious or faulty rApp does not produce one or more of its registered output DT(s), then all dependent rApps in the chain will fail.

Although individual rApps may be implemented such that they check the consumed data upon consuming (i.e. upon receiving) the data to be input, this action would be performed independently by rApp vendors/developers. This means that such mechanisms can be unreliable for addressing issues with malicious and/or faulty rApps and are not scalable, which leads to many different inconsistent and redundant rApp-side implementations.

To address at least one of these issues, the following proposes a method and apparatus within the O-RAN SMO and/or within the Non-RT RIC for the detection of faulty or malicious rApps based on their registered DTs and produced data.

In all of these examples, the described apparatus performs at least one of two types of checks on registered DTs, namely a consistency check, and a substantiality check. These types of checks may be performed on two different types of input data: information about registered DTs for an rApp and actual data output by that rApp.

The apparatus performing the checks may be a platform service of the SMO in the O-RAN logical architecture, or an rApp in the Non-RT RIC. In the latter case, the apparatus may be previously authorized to access DT information and to consume data from the DP rApps.

The two types of input data and the form of the checks will be considered. Examples of architecture and deployment mechanisms will then be discussed.

The presently described apparatus may perform this these checks using two types of received input data.

**A** first input data type relates to information about registered DTs in the Non-RT RIC. This information may be provided in form of a list the registered DTs and their associated details. The first input data may can be accessed via the R1 Data Management and Exposure function services. For example, current service operations that may be used to retrieve this information comprise the *Query DT and Discover DT Info* service operations and/or the *Subscribe DT Changes* and *Notify DT Changes* service operations.

A second input data type relates to output data produced by (DP) rApps, belonging to the registered DTs. The second input data type can be accessed via the R1 Data Management and Exposure function services (Data Request and Subscription, Data Delivery). For example, current service operations that may be used to retrieve this information comprise the *Request Data, Subscribe Data,* and *Pull Data* and *Push Data* service operations.

As mentioned above, the first and second input data types are checked using a consistency check and a substantiality check.

The purpose of the consistency check is to check whether an rApp's registered DT type is in fact being produced by the rApp. In other words, the purpose of the consistency check is to for the availability of data to be input to an rApp.

For the consistency check (also referred to herein as a DT consistency check), the apparatus discovers a DT output by an rApp via the registry, queries registered DT information from the registry (including metadata describing properties of the DT), consumes data of these DTs, and correlates registered metadata associated with that DT with the consumed data in order to detect inconsistencies between the registered DT information and the form of the output DT actually output from the rApp.

The DT metadata comprised in the registry that is queried by the apparatus may comprise information about the DTs':
- schema (i.e., the DT's syntactical description),
- semantic description,
- attributes such as
   ∘ availability of the data,
   ∘ production frequency,
   ∘ information on how to collect the data,
   ∘ filtering and preprocessing capabilities of the rApp producing the DT,
   ∘ Any other type of metadata about the represented data.

When the consistency check does not discover any inconsistency in the DT information/metadata and the data, the apparatus may indicate and/or report lack of inconsistency in a report.

When the consistency check discovers any inconsistency between the registered DT information/metadata and the data actually produced by the rApp, the apparatus may indicate the inconsistency to at least one of the Data Management and Exposure function service producer, the SMO rApp orchestrator, and/or the respective SMO entities concerned with data/rApp management or security. The apparatus may create and expose a DT inconsistency report that provides details about the inconsistency. For example, the DT inconsistency report may comprise information on such as whether there is an inconsistency in data availability, in one or more of the registered DT attributes (and if so, which attributes, and the data elements that are conflicting with the registered DT information/metadata, including DP (rApp) identification, data element timestamp, and/or any other data element identification). The DT inconsistency report may be exposed (i.e., provided) to at least one of a plurality of different entities. For example, the DT inconsistency report may be provided to at least one of a DME, an rApp orchestration in the SMO, and/or to other rApps.

For the substantiality check (which is also referred to herein as a data consistency check), the apparatus performs analysis on the consumed data in order to detect whether the data fulfills the aim of its DT description. In other words, the apparatus determines whether there is any semantic mismatch between the declared purpose of the DT and the actual data, which may arise from irregularities, maliciousness, and faults. This means that the substantiality check checks for the usability of data to be input to an rApp. The substantiality check may therefore mitigate errors resulting from the case when data with correct specifications (e.g., schema) is being produced as a DT but is filled with NULLs or all zeros or constants, or is in any other way meaningless.

The substantiality check may comprise, for example, checking one or more data elements:
- against all zeros or constant data,
- empty/NULL data,
- randomness of the data (e.g., the data elements are i.i.d. normally or uniformly distributed),
- data that is inconsistent with its own definition: e.g.,
   o when the DT is a rate, then the data instances is not outside the interval [0,1],
   o when the DT definition differs from that of another DT but the data is identical,
- data that does not make technical sense.

The substantiality check also may employ artificial learning and/or machine learning (AI/ML) methods and other heuristic or maliciousness proofing methods in order to detect inconsistent, faulty or malicious functioning.

When the substantiality check does not discover an irregularity or inconsistency in the data, the apparatus may indicate and/or report the lack of inconsistency in a report.

When the substantiality check discovers an irregularity or inconsistency in the data, it may indicate the inconsistency to at least one of the Data Management and Exposure function service producer, the SMO rApp orchestrator, and/or the respective SMO entities concerned with data/rApp management or security. The apparatus may create a data inconsistency report that comprises details about the inconsistency. For example, the data inconsistency report may comprise at least one respective indications for whether there is an inconsistency in the magnitude of the data, whether there is too much randomness in the data (relative to what the data's definition suggests), whether there are too many repetitions in the data (relative to what the data's definition suggests), and/or whether the data makes technically no sense. The data inconsistency report may comprise an indication of which data element are problematic (e.g., by comprising an identifier of a DP producing that data type) and a time stamp or any other data element identifier. The inconsistency report may comprise an indication of the level of confidence in the discovered inconsistency, such as low, medium, high, or a fractional/percentual representation (e.g., 99% confidence).

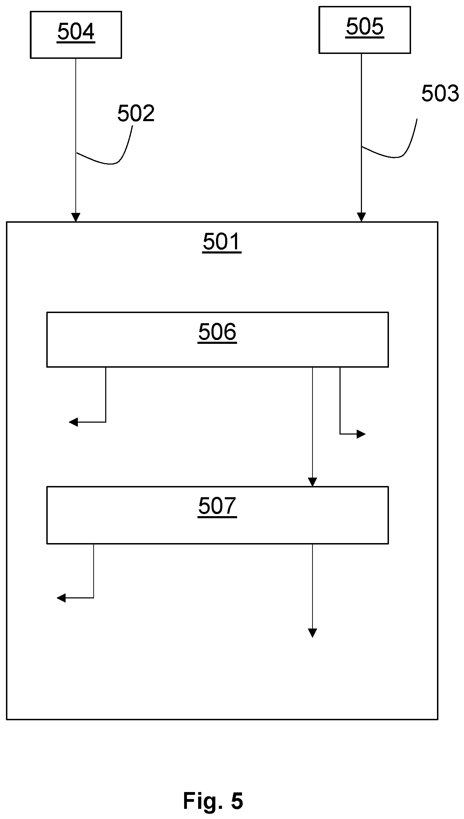

Figure 5 illustrates general features of the mechanism that may be employed by the described apparatus. This mechanism of Figure 5 be executed by the apparatus periodically, based on internal or external trigger (detected events, manual, or request/trigger from external entities), and/or at irregular intervals. As mentioned above, the apparatus performing the mechanisms of Figure 5 may be a platform service of the SMO in the O-RAN logical architecture, or an rApp in the Non-RT RIC.

Figure 5 illustrates an apparatus 501 that receives a first input 502 from a first information source 503 and a second input 504 from a second information source 505. The first information source may comprise R1 Data Management and Exposure function services. The first input 502 may comprise metadata and associated information on a first datatype. The second information source may comprise DP rApps. The second input 503 may comprise data associated with the first data type.

The apparatus 501 comprises a first functionality 506 and a second functionality 507. The first functionality 506 may receive at least the first input, and may receive the second input. The second functionality 507 may receive at least the second input, and may receive the first input.

The first functionality 506 performs the above-mentioned consistency check.

When the first functionality determines that the form of the first DT is inconsistent with the type of DT that the first DT purports to be, the apparatus 501 issues a warning. This warning may take the form of a report, an indication, or any other form of alarm for indicating to another function that the first DT is inconsistent with registered characteristics for the first DT. As mentioned above, may be provided to at least one of a plurality of different entities. For example, the DT inconsistency report may be provided to at least one of a DME, an rApp orchestration in the SMO, and/or to other rApps.

When the first functionality 506 determines that the form of the first DT is consistent with the type of DT that the first DT purports to be, the first functionality 506 may provide an indication of this to the second functionality 507. It is understood that this is merely illustrative of one example in which the first and second functionalities operate consecutively, and that the first and second functionalities may instead operate in parallel. It is further understood that the second functionality 507 may be performed prior to the first functionality.

When the first functionality 506 determines that the first DT is consistent with the type of DT that the first DT purports to be, the first functionality 506 may optionally provide an indication to another function that the first DT is consistent with registered characteristics for the first DT.

The second functionality 507 performs the performs the above-mentioned substantially check.

When the second functionality 507 determines that the content of the first DT is inconsistent with the type of DT that the first DT purports to be, the apparatus 501 issues a warning. This warning may take the form of a report, an indication, or any other form of alarm for indicating to another function that the data output by the first DT is inconsistent with registered characteristics for the first DT.

When the second functionality 507 determines that the content of the first DT is consistent with the type of DT that the first DT purports to be, the second functionality 507 may optionally provide an indication to another function that the data output by the first DT is consistent with registered characteristics for the first DT.

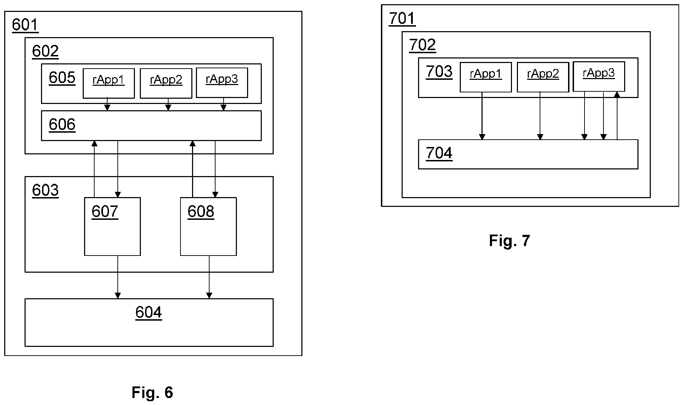

Figures 6 and 7 illustrate different ORAN architectures in which the described mechanism may be deployed.

In this example of Figure 6, the apparatus of Figure 5 is a service in the SMO and provides the DT and data consistency reports to the SMO's rApp orchestrator and/or the Data Management and Exposure function producer.

Figure 6 illustrates an SMO 601 that comprises a non-RT RIC 602, an apparatus 603 that performs a consistency check and a substantiality check on a DT, and an rApp orchestration entity 604. The rApp orchestration entity 604 may be a function that is located in the SMO, and so may be labelled as an "SMO anchored function".

The non-RT RIC 602 comprises a plurality of deployed rApps 605 (labelled rApp1, rApp2, and rApp3 in the attached, although it is understood that there may more or fewer deployed rApps). The non-RT RIC 602 comprises a Data Management and Exposure function 606 that is arranged to receive outputs of the deployed rApps as inputs. These inputs may relate to data registration and/or production.

The Data Management and Exposure function 606 provides signals to a first functionality 607 located in the apparatus 603 that performs the above-mentioned consistency check. This signalling may relate to DT discovery, and/or provide information on a DT to be checked by the first functionality 607.

The Data Management and Exposure function 606 provides signals to a second functionality 608 located in the apparatus 603 that performs the above-mentioned substantiality check. This signalling may relate to DT discovery, and/or provide information on a DT to be checked by the second functionality 608.

The first functionality 607 may output a report and/or indication that indicates whether the consistency check has determined that the DT is consistent or not. The second functionality 608 may output a report and/or indication that indicates whether the substantially check has determined that the data of the DT comprises non-trivial content. The respective report(s) and/or indications output by the first and second functionality may be independently provided to at least one of the rApp orchestration function 604 and the Data Management and Exposure function 606.

Figure 7 illustrates another example O-RAN architecture. In this example, the apparatus performing the mechanism(s) of Figure 5 is comprised in an rApp itself (rApp3), which consumes DT information and data over R1 from the Data Management and Exposure function. The DT and data (in)consistency reports are provided over the R1 to the Data Management and Exposure function producer. In this example architecture, the apparatus rApp3 has been authorized (e.g., by a Data Registration and Discovery Service Producer) to access and consume those DTs and associated data for which the checks are to be performed.

Figure 7 illustrates an SMO 701 that comprises a non-RT RIC 702. The non-RT RIC 702 comprises a plurality of deployed rApps 703 labelled rApp1, rApp2, and rApp3 in the attached, although it is understood that there may more or fewer deployed rApps), and a Data Management and Exposure function 704. As mentioned above, in the present example, rApp3 performs the actions of the apparatus described above with reference to Figure 5.

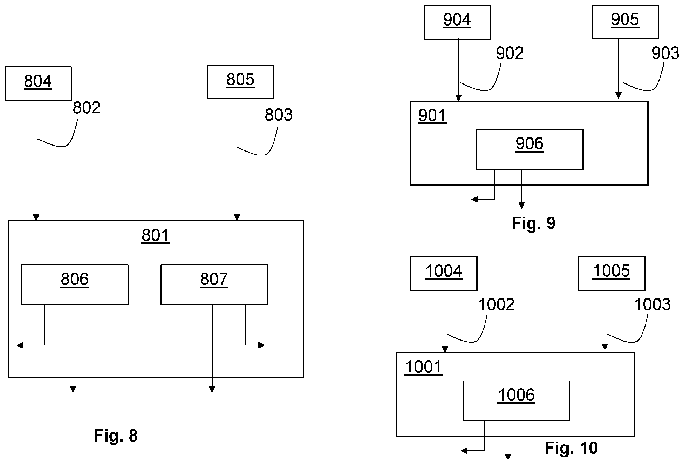

As mentioned above in relation to Figure 5, the consistency and substantiality tests may be performed in parallel or in series. They may alternatively be performed separately and independently of each other. These potential configurations are described below with reference to Figures 8 to 10. It is understood that the architectures described above with references to Figures 6 and 7 may be used to perform the mechanisms of any of Figures 5, 8, 9 and/or 10, and are therefore not limited to the case where the apparatus performs the mechanisms of Figure 5.

Figure 8 illustrates an example mechanism in which the consistency check and substantiality check are performed in parallel.

Figure 8 illustrates an apparatus 801 that receives a first input 802 from a first information source 803 and a second input 804 from a second information source 805. The first information source may comprise R1 Data Management and Exposure function services. The first input 802 may comprise metadata and associated information on a first datatype. The second information source may comprise DP rApps. The second input 803 may comprise data associated with the first data type.

The apparatus 801 comprises a first functionality 806 and a second functionality 807. The first functionality 806 may receive at least the first input. The second functionality 807 may receive at least the second input.

The first functionality 806 performs the above-mentioned consistency check.

When the first functionality determines that the form of the first DT is inconsistent with the type of DT that the first DT purports to be, the apparatus 801 issues a warning. This warning may take the form of a report, an indication, or any other form of alarm for indicating to another function that the first DT is inconsistent with registered characteristics for the first DT.

When the first functionality 806 determines that the form of the first DT is consistent with the type of DT that the first DT pur54rports to be, the first functionality 806 may optionally provide an indication to another function that the first DT is consistent with registered characteristics for the first DT.

The second functionality 807 performs the performs the above-mentioned substantially check.

When the second functionality 807 determines that the content of the first DT is inconsistent with the type of DT that the first DT purports to be, the apparatus 801 issues a warning. This warning may take the form of a report, an indication, or any other form of alarm for indicating to another function that the data output by the first DT is inconsistent with registered characteristics for the first DT.

When the second functionality 807 determines that the content of the first DT is consistent with the type of DT that the first DT purports to be, the second functionality 807 may optionally provide an indication to another function that the data output by the first DT is consistent with registered characteristics for the first DT.

Figure 9 illustrates an example in which a consistency checked is performed independently of a substantiality check, while Figure 10 illustrates an example in which a substantiality check is performed independently of a consistency check.

Figure 9 illustrates an apparatus 901 that receives a first input 902 from a first information source 903 and a second input 904 from a second information source 905. The first information source may comprise R1 Data Management and Exposure function services. The first input 902 may comprise metadata and associated information on a first datatype. The second information source may comprise DP rApps. The second input 903 may comprise data associated with the first data type.

The apparatus 901 comprises a first functionality 906. The first functionality 906 may receive at least the first input, and may receive the second input.

The first functionality 906 performs the above-mentioned consistency check.

When the first functionality determines that the form of the first DT is inconsistent with the type of DT that the first DT purports to be, the apparatus 901 issues a warning. This warning may take the form of a report, an indication, or any other form of alarm for indicating to another function that the first DT is inconsistent with registered characteristics for the first DT.

When the first functionality 906 determines that the form of the first DT is consistent with the type of DT the first DT purports to be, the first functionality 906 may optionally provide an indication to another function that the first DT is consistent with registered characteristics for the first DT.

Figure 10 illustrates an apparatus 1001 that receives a first input 1002 from a first information source 1003 and a second input 1004 from a second information source 1005. The first information source may comprise R1 Data Management and Exposure function services. The first input 1002 may comprise metadata and associated information on a first datatype. The second information source may comprise DP rApps. The second input 1003 may comprise data associated with the first data type.

The apparatus 1001 comprises a second functionality 1006. The second functionality 1006 may receive the second input 1004 and may receive the first input 1002.

The second functionality 1007 performs the performs the above-mentioned substantially check.

When the second functionality 1007 determines that the content of the first DT is inconsistent with the type of DT that the first DT purports to be, the apparatus 1001 issues a warning. This warning may take the form of a report, an indication, or any other form of alarm for indicating to another function that the data output by the first DT is inconsistent with registered characteristics for the first DT.

When the second functionality 1007 determines that the content of the first DT is consistent with the type of DT that the first DT purports to be, the second functionality 1007 may optionally provide an indication to another function that the data output by the first DT is consistent with registered characteristics for the first DT.

In all of the above-mentioned examples, rApps that are determined to be suspicious (i.e., rApps that produce(d) inconsistent data or the wrong type of DT) may be undeployed by the SMO orchestrator.

Further, in the above examples, a DT that is determined to be inconsistent may be deregistered automatically by the Data Management and Exposure function producer so that the unregistered rApp cannot be consumed anymore and is not shown as available to other rApps and DCs.

Further, in the above examples, a DT that is detected to be inconsistent and/or rApp that registered that DT and/or vendor of the rApp may be put on a blacklist. In case the rApp is to be deployed next, or the DT is to be registered next, an indication may be issued that indicates that the DT and/or rApp was problematic in the past. This indication may be ingested by the SMO, the orchestrator, by other rApps, or by other SMO-anchored services.

The following considers aspects of the above-mentioned examples. It is therefore understood that the following described features may find functional correspondence in features of the above examples.

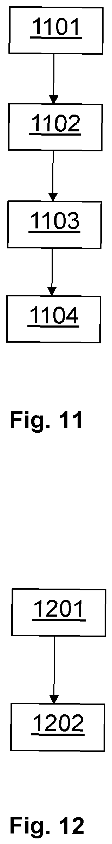

Figures 11 and 12 illustrate example operations that may be performed by respective apparatus illustrated in the examples above. It is therefore understood that the features mentioned below may find functional correspondence in the above-mentioned features, while the above examples provide examples of how the presently described techniques may be implemented in practice.

Figure 11 illustrates operations that may be performed by a first network apparatus.

During 1101, the first network apparatus receives, from a data registry, information about a form of a data type registered as being output by a non-real time Radio Access Network Intelligent Controller application, rApp.

During 1102, the first network apparatus receives, from the rApp, a data output.

During 1103, the first network apparatus uses said information and the data output to perform at least one of: a first determination that determines that the registered data type is inconsistent in form with the data output; and a second determination that determines that the data output comprises invalid values.

During 1104, the first network apparatus signals an indication of the result of said first and/or second determination to a second network apparatus. The second network apparatus may be the second network apparatus of Figure 12.

Said using may comprise determining both the first and second determinations. Said using may comprise determining only one of the first and second determinations.

The information about the form of the data type registered as being output by the rApp may comprise metadata comprising at least one of: a schema; a semantic description; an availability of the data output (for example, a start time and/or a stop time of data production, a time interval for the data points (e.g., one data point represent a certain time range, say 8:00-9:00, a periodicity of production and delivery, and/or a target (e.g., a set of managed objects to which the data is associated); a frequency of the data output; pre-processing capabilities of the rApp; and filtering capabilities of the rApp.

Performing the first determination may comprise: comparing the information about the form of the data type to the form of the received data output; and determining that the registered data type is inconsistent in form with a form of the data output by the rApp.

Performing the second determination may comprise: analyzing at least one value comprised in the data output to determine whether the at least one value is usable as an input to another rApp; and determining that the data output comprises invalid values when the at least one value is not usable as an input to another rApp. The analyzing may comprise at least one: determining whether the at least one value is random; determining whether the at least one value is inconsistent with a definition of data produced according to the received form of the data type; and comparing the at least one value to at least one of: all zeroes; at least one constant value; and empty data.

The first and second determinations may be performed in parallel. The first and second determinations may be performed in series.

Figure 12 illustrates operations that may be performed by a second network apparatus.

During 1201, the second network apparatus receives, from a first network apparatus (e.g., the first network apparatus of Figure 11), an indication of at least one of the following: a first determination that a data type being output by a non-real time Radio Access Network Intelligent Controller application, rApp, is inconsistent in form with a form of data type registered as being output by the rApp; and a second determination data output by the rApp comprises invalid values.

During 1202, in response to said indication, the second network apparatus blacklists the rApp to prevent other rApps from using said output as an input. In other words, the second network apparatus, based on said indication, blacklists the rApp.

In the above examples of Figure 11 and 12, the indication may comprise only one of said first and second determinations. In the above examples of Figure 11 and 12, the indication may comprise both the first and second determinations.

In the above examples of Figure 11 and 12, the first network apparatus may be at least one of: an rApp; and an entity of a Service, Management, and Orchestration function.

In the above examples of Figure 11 and 12, the second network apparatus may be an entity that performs security and/or management functions of a Service, Management, and Orchestration function, and/or the second network apparatus is a data registration function of a Data Management and Exposure function.

In the above examples of Figure 11 and 12, the first and/or second network apparatus may be located in a RAN Intelligent controller (RIC). For example, the first and second network apparatus may be located in a RIC. The RIC may receive at least one output from at least one rApp, wherein the at least one rApp has not been indicated as having a data type that is inconsistent in form with a form of data type registered as being output by the rApp, and/or has not been indicated as having a data output that comprises invalid values. In other words, the first apparatus has not indicated the at least one rApp as fulfilling at least one of the first and second determinations, and/or the second apparatus has not blacklisted the at least one rApp. The RIC may use the at least one output to determine a change to be made to the operation of a radio access network for optimising resources within the radio access network. For example, the change may relate to a mobility procedure (e.g., a handover or conditional handover procedure), traffic steering optimization (e.g., to route traffic across different access paths), resource optimization, Quality of Service optimization and/or Quality of Experience optimization The RIC may cause said change to be made to the radio access network. For example, the RIC may signal an instruction to a base transceiver station to cause the base transceiver station to perform an action (e.g., handover a user to another access point, change how resources are currently being used by UE connected thereto, etc.).

The foregoing description has provided by way of non-limiting examples a full and informative description of some examples. However, various modifications and adaptations may become apparent to those skilled in the relevant arts in view of the foregoing description, when read in conjunction with the accompanying drawings and the claims. However, all such and similar modifications of the teachings will still fall within the scope of the claims.

In the above, different examples are described using, as an example of an access architecture to which the described techniques may be applied, a radio access architecture based on long term evolution advanced (LTE Advanced, LTE-A) or new radio (NR, 5G), without restricting the examples to such an architecture, however. The examples may also be applied to other kinds of communications networks having suitable means by adjusting parameters and procedures appropriately. Some examples of other options for suitable systems are the universal mobile telecommunications system (UMTS) radio access network (UTRAN), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

As provided herein, various aspects are described in the detailed description of examples and in the claims. In general, some examples may be implemented in hardware or special purpose circuits, software, logic or any combination thereof. For example, some aspects may be implemented in hardware, while other aspects may be implemented in firmware or software which may be executed by a controller, microprocessor or other computing device, although examples are not limited thereto. While various examples may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The examples may be implemented by computer software stored in a memory and executable by at least one data processor of the involved entities or by hardware, or by a combination of software and hardware. Further in this regard it should be noted that any procedures, e.g., as in Figure 11 and/or Figure 12, and/or otherwise described previously, may represent program steps, or interconnected logic circuits, blocks and functions, or a combination of program steps and logic circuits, blocks and functions. The software may be stored on such physical media as memory chips, or memory blocks implemented within the processor, magnetic media (such as hard disk or floppy disks), and optical media (such as for example DVD and the data variants thereof, CD, and so forth).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (AStudy ItemC), gate level circuits and processors based on multicore processor architecture, as nonlimiting examples.

Additionally or alternatively, some examples may be implemented using circuitry. The circuitry may be configured to perform one or more of the functions and/or method steps previously described. That circuitry may be provided in the base station and/or in the communications device and/or in a core network entity.

**As** used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

## Claims

1. A method for a first network apparatus, the method comprising:
receiving (1101), from a data registry, information about a form of a data type registered as being output by a non-real time Radio Access Network Intelligent Controller application, rApp;
receiving (1102), from the rApp, a data output;
using (1103) said information and the data output to perform at least one of:
a first determination that determines that the registered data type is inconsistent in form with the data output; and
a second determination that determines that the data output comprises invalid values;
and
signalling (1104) an indication of the result of said first and/or second determination to a second network apparatus.

2. A method as claimed in claim 1, wherein said using comprises determining both the first and second determinations.

3. A method as claimed in any of claims 1 to 2, wherein the first and second determinations are performed in parallel.

4. A method as claimed in any of claims 1 to 2, wherein the first and second determinations are performed in series.

5. A method as claimed in claim 1, wherein said using comprises determining only one of the first and second determinations.

6. A method as claimed in any preceding claim, wherein the information about the form of the data type registered as being output by the rApp comprises metadata comprising at least one of:
a schema;
a semantic description;
an availability of the data output;
a frequency of the data output;
pre-processing capabilities of the rApp; and
filtering capabilities of the rApp.

7. A method as claimed in any preceding claim, wherein performing the first determination comprises:
comparing the information about the form of the data type to the form of the received data output; and
determining that the registered data type is inconsistent in form with a form of the data output by the rApp.

8. A method as claimed in any preceding claim, wherein performing the second determination comprises:
analyzing at least one value comprised in the data output to determine whether the at least one value is usable as an input to another rApp; and
determining that the data output comprises invalid values when the at least one value is not usable as an input to another rApp.

9. A method as claimed in claim 8, wherein the analyzing comprises at least one of:
determining whether the at least one value is random;
determining whether the at least one value is inconsistent with a definition of data produced according to the received form of the data type; and
comparing the at least one value to at least one of:
all zeroes;
at least one constant value; and
empty data.

10. A method as claimed in any preceding claim, wherein the method comprises:
receiving at least one output from at least one rApp, wherein the at least one rApp has not been indicated as having a data type that is inconsistent in form with a form of data type registered as being output by the rApp, and/or has not been indicated as having a data output that comprises invalid values;
using the at least one output to determine a change to be made to the operation of a radio access network for optimising resources within the radio access network; and
causing said change to be made to the radio access network.

11. A method for a second network apparatus, the method comprising:
receiving (1201), from a first network apparatus, an indication of at least one of the following:
a first determination that a data type being output by a non-real time Radio Access Network Intelligent Controller application, rApp, is inconsistent in form with a form of data type registered as being output by the rApp; and
a second determination data output by the rApp comprises invalid values, and
in response to said indication, blacklisting (1202) the rApp to prevent other rApps from using said output as an input.

12. A method as claimed in claim 11, wherein the method comprises:
receiving at least one output from at least one rApp, wherein the at least one rApp has not been indicated as having a data type that is inconsistent in form with a form of data type registered as being output by the rApp, and/or has not been indicated as having a data output that comprises invalid values;
using the at least one output to determine a change to be made to the operation of a radio access network for optimising resources within the radio access network; and
causing said change to be made to the radio access network.

13. A first network apparatus comprising means for performing the method of any of claims 1 to 10.

14. A second network apparatus comprising means for performing the method of any of claims 11 to 12.

15. A computer program comprising instructions which, when executed by a network apparatus, either cause the apparatus to perform the method of any of claims 1 to 10, or cause the apparatus to perform the method of any of claims 11 to 12.

## Patentansprüche

1. Verfahren für eine erste Netzwerkeinrichtung, wobei das Verfahren Folgendes umfasst:
Empfangen (1101) von Informationen über eine Form einer Datenart, die als von einer Nichtechtzeitanwendung, rApp, einer intelligenten Steuerung eines Funkzugangsnetzwerks ausgegeben registriert ist, von einem Datenregister;
Empfangen (1102) einer Datenausgabe von der rApp;
Verwenden (1103) der Informationen und der Datenausgabe, um mindestens eines von Folgendem durchzuführen:
einer ersten Bestimmung, die bestimmt, dass die registrierte Datenart mit der Datenausgabe hinsichtlich der Form nicht konsistent ist; und
einer zweiten Bestimmung, die bestimmt, dass die Datenausgabe ungültige Werte umfasst;
und
Signalisieren (1104) einer Anzeige des Ergebnisses der ersten und/oder der zweiten Bestimmung zu einer zweiten Netzwerkeinrichtung.

2. Verfahren nach Anspruch 1, wobei das Verwenden das Bestimmen sowohl der ersten als auch der zweiten Bestimmung umfasst.

3. Verfahren nach einem der Ansprüche 1 bis 2, wobei die erste und die zweite Bestimmung parallel durchgeführt werden.

4. Verfahren nach einem der Ansprüche 1 bis 2, wobei die erste und die zweite Bestimmung in Reihe durchgeführt werden.

5. Verfahren nach Anspruch 1, wobei das Verwenden das Bestimmen von nur einer der ersten und der zweiten Bestimmung umfasst.

6. Verfahren nach einem der vorhergehenden Ansprüche, wobei die Informationen über die Form der Datenart, die als von der rApp ausgegeben registriert ist, Metadaten umfassen, die mindestens eines von Folgendem umfassen:
einem Schema;
einer semantischen Beschreibung;
einer Verfügbarkeit der Datenausgabe;
einer Häufigkeit der Datenausgabe;
Vorverarbeitungsfähigkeiten der rApp; und
Filterfähigkeiten der rApp.

7. Verfahren nach einem der vorhergehenden Ansprüche, wobei das Durchführen der ersten Bestimmung Folgendes umfasst:
Vergleichen der Informationen über die Form der Datenart mit der Form der empfangenen Datenausgabe; und
Bestimmen, dass die registrierte Datenart mit einer Form der Datenausgabe durch die rApp hinsichtlich der Form nicht konsistent ist.

8. Verfahren nach einem der vorhergehenden Ansprüche, wobei das Durchführen der zweiten Bestimmung Folgendes umfasst:
Analysieren von mindestens einem Wert, der in der Datenausgabe umfasst ist, um zu bestimmen, ob der mindestens eine Wert als eine Eingabe in eine andere rApp verwendbar ist; und
Bestimmen, dass die Datenausgabe ungültige Werte umfasst, wenn der mindestens eine Wert als eine Eingabe in eine andere rApp nicht verwendbar ist.

9. Verfahren nach Anspruch 8, wobei das Analysieren mindestens eines von Folgendem umfasst:
Bestimmen, ob der mindestens eine Wert willkürlich ist;
Bestimmen, ob der mindestens eine Wert mit einer Definition von Daten nicht konsistent ist, die gemäß der empfangenen Form der Datenart produziert wurden; und
Vergleichen des mindestens einen Wertes mit mindestens einem von Folgendem:
allen Nullen;
mindestens einem konstanten Wert; und
leeren Daten.

10. Verfahren nach einem der vorhergehenden Ansprüche, wobei das Verfahren Folgendes umfasst:
Empfangen von mindestens einer Ausgabe von mindestens einer rApp, wobei die mindestens eine rApp nicht als eine Datenart aufweisend angezeigt wurde, die hinsichtlich der Form mit einer Form einer Datenart nicht konsistent ist, die als von der rApp ausgegeben registriert ist, und/oder nicht als eine Datenausgabe aufweisend angezeigt wurde, die ungültige Werte umfasst;
Verwenden der mindestens einen Ausgabe, um eine Änderung zu bestimmen, die am Betrieb eines Funkzugangsnetzwerks zum Optimieren von Ressourcen im Funkzugangsnetzwerk vorzunehmen ist; und
Veranlassen, dass die Änderung am Funkzugangsnetzwerk vorgenommen wird.

11. Verfahren für eine zweite Netzwerkeinrichtung, wobei das Verfahren Folgendes umfasst:
Empfangen (1201) einer Anzeige von mindestens einem von Folgendem von einer ersten Netzwerkeinrichtung:
einer ersten Bestimmung, dass eine Datenart, die von einer Nichtechtzeitanwendung, rApp, einer intelligenten Steuerung eines Funkzugangsnetzwerks ausgegeben wird, mit einer Form einer Datenart, die als von der rApp ausgegeben registriert ist, hinsichtlich der Form nicht konsistent ist; und
einer zweiten Bestimmung, dass eine Datenausgabe durch die rApp ungültige Werte umfasst, und
in Reaktion auf die Anzeige, Setzen der rApp auf die Schwarzliste (1202), um zu verhindern, dass andere rApps die Ausgabe als eine Eingabe verwenden.

12. Verfahren nach Anspruch 11, wobei das Verfahren Folgendes umfasst:
Empfangen von mindestens einer Ausgabe von mindestens einer rApp, wobei die mindestens eine rApp nicht als eine Datenart aufweisend angezeigt wurde, die hinsichtlich der Form mit einer Form einer Datenart nicht konsistent ist, die als von der rApp ausgegeben registriert ist, und/oder nicht als eine Datenausgabe aufweisend angezeigt wurde, die ungültige Werte umfasst;
Verwenden der mindestens einen Ausgabe, um eine Änderung zu bestimmen, die am Betrieb eines Funkzugangsnetzwerks zum Optimieren von Ressourcen im Funkzugangsnetzwerk vorzunehmen ist; und
Veranlassen, dass die Änderung am Funkzugangsnetzwerk vorgenommen wird.

13. Erste Netzwerkeinrichtung, die Mittel zum Durchführen des Verfahrens von einem der Ansprüche 1 bis 10 umfasst.

14. Zweite Netzwerkeinrichtung, die Mittel zum Durchführen des Verfahrens von einem der Ansprüche 11 bis 12 umfasst.

15. Computerprogramm, das Anweisungen umfasst, die, wenn sie von einer Netzwerkeinrichtung ausgeführt werden, entweder die Einrichtung veranlassen, das Verfahren von einem der Ansprüche 1 bis 10 durchzuführen, oder die Einrichtung veranlassen, das Verfahren von einem der Ansprüche 11 bis 12 durchzuführen.

## Revendications

1. Procédé pour un premier appareil de réseau, le procédé comprenant les étapes suivantes :
recevoir (1101) d'un registre de données des informations sur une forme d'un type de données enregistré comme étant délivré par une application de contrôleur intelligent de réseau d'accès radio en différé, rApp ;
recevoir (1102) de la rApp une sortie de données ;
utiliser (1103) lesdites informations et la sortie de données pour réaliser au moins l'une parmi :
une première détermination qui détermine que la forme du type de données enregistré est incompatible avec la sortie de données ; et
une deuxième détermination qui détermine que la sortie de données comprend des valeurs non valides ;
et
signaler (1104) une indication du résultat de ladite première détermination et/ou de ladite deuxième détermination à un deuxième appareil de réseau.

2. Procédé selon la revendication 1, dans lequel ladite utilisation comprend la détermination à la fois de la première détermination et de la deuxième détermination.

3. Procédé selon l'une des revendications 1 et 2, dans lequel la première détermination et la deuxième détermination sont effectuées en parallèle.

4. Procédé selon l'une des revendications 1 et 2, dans lequel la première détermination et la deuxième détermination sont effectuées en série.

5. Procédé selon la revendication 1, dans lequel ladite utilisation comprend la détermination d'une seule parmi la première détermination et la deuxième détermination.

6. Procédé selon l'une des revendications précédentes, dans lequel les informations sur la forme du type de données enregistré comme étant délivré par la rApp comprennent des métadonnées comprenant au moins un parmi :
un schéma ;
une description sémantique ;
une disponibilité de la sortie de données ;
une fréquence de la sortie de données ;
des capacités de prétraitement de la rApp ; et
des capacités de filtrage de la rApp.

7. Procédé selon l'une des revendications précédentes, dans lequel le fait d'réaliser la première détermination comprend ce qui suit :
comparer les informations sur la forme du type de données à la forme de la sortie de données reçues ; et
déterminer que la forme du type de données enregistré est incompatible avec une forme de la sortie de données par la rApp.

8. Procédé selon l'une des revendications précédentes, dans lequel le fait d'réaliser la deuxième détermination comprend ce qui suit :
analyser au moins une valeur comprise dans la sortie de données pour déterminer si l'au moins une valeur est utilisable comme entrée pour une autre rApp ; et
déterminer que la sortie de données comprend des valeurs non valides lorsque l'au moins une valeur n'est pas utilisable comme entrée pour une autre rApp.

9. Procédé selon la revendication 8, dans lequel l'analyse comprend au moins une des opérations suivantes :
déterminer si l'au moins une valeur est aléatoire ;
déterminer si l'au moins une valeur est incompatible avec une définition de données produites selon la forme reçue du type de données ; et
comparer l'au moins une valeur à au moins un parmi :
tous les zéros ;
au moins une valeur constante ; et
des données vides.

10. Procédé selon l'une des revendications précédentes, dans lequel le procédé comprend les étapes suivantes :
recevoir au moins une sortie d'au moins une rApp, dans lequel l'au moins une rApp n'a pas été indiquée comme ayant un type de données dont la forme est incompatible avec une forme de type de données enregistré comme étant délivré par la rApp, et/ou n'a pas été indiquée comme ayant une sortie de données qui comprend des valeurs non valides ;
utiliser l'au moins une sortie pour déterminer une modification à apporter au fonctionnement d'un réseau d'accès radio afin d'optimiser les ressources au sein du réseau d'accès radio ; et
faire en sorte que ladite modification soit apportée au réseau d'accès radio.

11. Procédé pour un deuxième appareil de réseau, le procédé comprenant les étapes suivantes :
recevoir (1201) d'un premier appareil de réseau une indication d'au moins l'une des déterminations suivantes :
une première détermination selon laquelle la forme d'un type de données délivré par une application de contrôleur intelligent de réseau d'accès radio en différé, rApp, est incompatible avec une forme de type de données enregistré comme étant délivré par la rApp ; et
une deuxième détermination selon laquelle la sortie de données par la rApp comprend des valeurs non valides, et
en réponse à ladite indication, mettre (1202) la rApp sur liste noire afin d'empêcher d'autres rApp d'utiliser ladite sortie comme entrée.

12. Procédé selon la revendication 11, dans lequel le procédé comprend les étapes suivantes :
recevoir au moins une sortie d'au moins une rApp, dans lequel l'au moins une rApp n'a pas été indiquée comme ayant un type de données dont la forme est incompatible avec une forme de type de données enregistré comme étant délivré par la rApp, et/ou n'a pas été indiquée comme ayant une sortie de données qui comprend des valeurs non valides ;
utiliser l'au moins une sortie pour déterminer une modification à apporter au fonctionnement d'un réseau d'accès radio afin d'optimiser les ressources au sein du réseau d'accès radio ; et
faire en sorte que ladite modification soit apportée au réseau d'accès radio.

13. Premier appareil de réseau comprenant des moyens pour réaliser le procédé de l'une des revendications 1 à 10.

14. Deuxième appareil de réseau comprenant des moyens pour réaliser le procédé de l'une des revendications 11 et 12.

15. Programme informatique comprenant des instructions qui, lorsqu'elles sont exécutées par un appareil de réseau, soit amènent l'appareil à réaliser le procédé de l'une des revendications 1 à 10, soit amènent l'appareil à réaliser le procédé de l'une des revendications 11 et 12.
